# EUROPEAN PATENT SPECIFICATION

(11) **EP 1 686 574 B1**
(45) Date of publication and mention of the grant of the patent: **04.03.2009**
(21) Application number: 05001968.6
(22) Date of filing: 31.01.2005
(51) Int. Cl.: G11B 7/24, G11B 7/246

(54) **Optical recording medium with different optical absorption of the two recording layers**
Optisches Aufzeichnungsmedium mit unterschiedlicher optischer Absorption der beiden Aufzeichnungsschichten
Support d'enregistrement optique avec absorption optique différents des deux couches d'enregistrement

(43) Date of publication of application: 02.08.2006
(73) Proprietor: Ricoh Company, Ltd., Tokyo 143-8555 (JP)
(72) Inventor: Yashiro, Tohru Ricoh Co., Ltd., Tokyo 143-8555 (JP); Nakamura, Yuki Ricoh Co., Ltd., Tokyo 143-8555 (JP); Mikami, Tatsuo Ricoh Co., Ltd., Kanagawa (JP)
(74) Representative: Barz, Peter

(56) References cited:
- EP-A- 1 213 714
- EP-A- 1 496 509
- WO-A-03/083851
- WO-A-20/04055799
- US-A- 5 117 416
- PATENT ABSTRACTS OF JAPAN vol. 2003, no. 12, 5 December 2003 (2003-12-05) & JP 2005 025836 A (RICOH CO LTD), 27 January 2005 (2005-01-27)

## Description

### BACKGROUND OF THE INVENTION

### Field of the Invention

The present invention relates to an optical recording medium comprising two recording layers wherein the recording and reproducing can be performed by irradiating the light to one surface of the optical recording medium, a method for producing the optical recording medium, and a method and apparatus for recording and reproducing the optical recording medium.

### Description of the Related Art

As an optical recording medium, besides a read-only DVD (digital versatile disc), a recordable DVD (such as DVD+RW, DVD+R, DVD-R, DVD-RW, DVD-RAM) are put to practical use. The DVD+R and DVD+RW are on the way for improving the conventional technique for CD-R and CD-RW (a recordable compact disc) and for securing a reproducing compatibility of the DVD+R and DVD+RW with a read-only DVD, the DVD+R and DVD+RW are so designed that a recording density (such as track pitch and signal mark length) and a thickness of the substrate satisfy the CD standard and the DVD standard.

For example, the DVD+R is produced, like the CD-R, in such a manner that a substrate for recording the information, which is produced by disposing a recording layer on a substrate by spin-coating a dye on the substrate and disposing a reflection layer on a surface of the support which is opposite to another surface of the support on which the recording layer is disposed, is adhesive-bonded to a substrate having the same form as the substrate for recording the information through an adhesive-bonding. In this case, as the recording layer, a dye material is used. One of the characteristics of the CD-R is to have a high reflectance (65 %) satisfying the CD standard; however, for obtaining a higher reflectance in the above-noted composition of the DVD+R, it is necessary that the recording layer can satisfy a specified complex refractive index at a wavelength of a light used for the recording and reproducing and since the light absorption characteristics of a dye comprised in the recording layer can satisfy the above-noted necessity, the CD-R can have a high reflectance. With respect to the DVD, there is the same principle as the above-noted principle with respect to the CD-R.

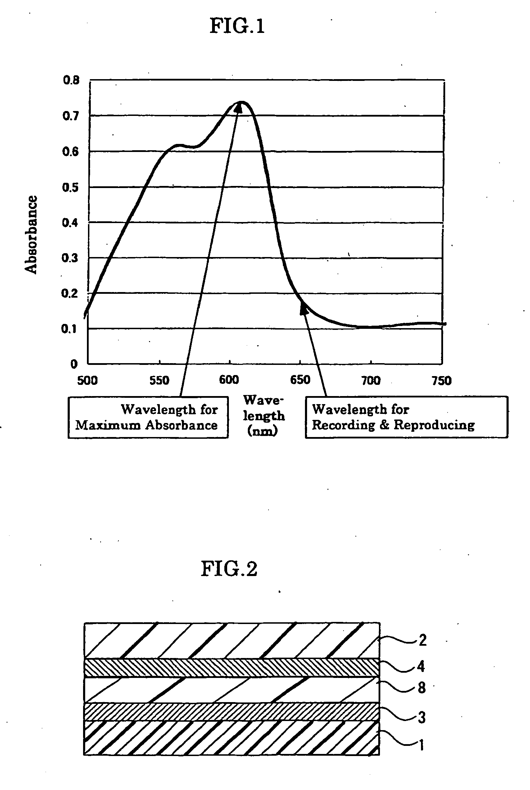

With respect to the DVD, for increasing the recording capacity, the DVD having two recording layers is proposed. FIG. 2 is a cross-sectional view showing a layer composition of the DVD having two recording layers. A first substrate 1 is adhesive-bonded to a second substrate 2 through an intermediate layer 8 comprising an UV-curing resin. On the inner surface of the first substrate 1, a first recording layer 3 is disposed and on the inner surface of the second substrate 2, a second recording layer 4 is disposed. The first recording layer 3 is formed as a semitransparent film from a dielectric film or a thin metal film. The second recording layer 4 is formed as a reflective film from a metal film.

On the first recording layer, a recording mark in the form of concavo-convex is formed and by reflecting or interfering a laser for the reproducing an optical recording medium, a recording signal is read. In the optical recording medium, the signal is read from the two recording layers, so that the optical recording medium can obtain a memory capacity of at most 8.5 GB. The thickness of the first substrate 1 and the second substrate 2 is 0.6 mm, respectively and the thickness of the intermediate layer is about 50 µm. The semitransparent film of the first recording layer is so formed that a reflectance of the first recording layer is 30 %. After a laser light irradiated for reproducing the second recording layer is damped at the first recording layer through a reflection of about 30 % of all light amount of the laser, the laser is reflected at the reflective layer (the second recording layer) and after the laser is damped once again at the first recording layer, the laser gets out of the optical recording medium. A signal of each recording layer can be reproduced in such a manner that a laser (a light for the reproducing) is so focused that the laser is brought to focus on the first or second recording layer and a reflected light is detected. With respect to the DVD, the wavelength of the laser used for the recording and reproducing is generally about 650 nm.

However, the above-noted recordable DVD (such as DVD+R, DVD-R, DVD-RW and DVD+RW) has only one recording layer which can be read from one surface of the medium and for obtaining a larger memory capacity with using such an optical recording medium, it is considered to reproduce from the both surfaces of the medium. On the other hand, with respect to an optical recording medium having two layers in which the recording and reproducing is performed by irradiating the light to one surface of the medium, since the medium has two recording layers, when a signal is recorded by irradiating the laser, which is brought to focus on the second recording layer (more distant from the optical pick up than the first recording layer), the laser is damped at the first recording layer, so that a disadvantage is caused wherein it is difficult to obtain both the light absorbance and the light reflectance which both are required for recording the second recording layer.

For example, Japanese Patent Application Laid-Open (JP-A) No. 11-66622 proposes an optical recording medium in which during the recording, the two recording layers comprising an organic dye can be recorded from one surface of the medium and during the reproducing, the two recording layers can be read from the above-noted one surface of the medium. However, in this proposal, proposed is only an optical recording medium produced by adhesive-bonding such two substrates to each other, as a first substrate in which the recording is performed by irradiating the laser to one surface of the first substrate and a second substrate in which the recording is performed by irradiating the laser to the surface of the second recording layer film, and the above-noted disadvantage in which both the light absorbance and the light reflectance which both are required for recording the second recording layer can be difficultly obtained, can not be solved. Further, a description with respect to a problem of a defect in a semitransparent layer having a thin film thickness is neither disclosed nor suggested.

Further, Japanese Patent (JP-B) No. 2796288 discloses an optical recording medium comprising multiple layers in which two recording layers comprising a dye are separated by an intermediate layer; however in this proposal, a high reflectance principle utilizing multiple interferences between a reflective layer and a dye film, like CD-R and DVD+R, cannot be employed. In addition, since the object of the proposal is the recording with multiple wavelengths, enlarging a recording capacity by two layers with a single wavelength cannot be obtained.

Therefore, with respect to an optical recording medium in which the recording and reproducing is performed in two layers, such as the first and second recording layers by irradiating the light to one surface of the recording medium (i.e., the surface of the first substrate), an optical recording medium in which a satisfactory recording signal characteristic can be obtained also from the second recording layer has not been attained yet and a swift attainment thereof has been desired.

JP-A-2005025836 discloses a two-layer optical recording medium with a first substrate, a first recording layer containing an organic dyestuff as a principal component, a first reflective layer, an adhesive layer, an inorganic protective layer, a second recording layer containing an organic dyestuff as a principal component, a second reflective layer, and a second substrate from an incident surface side of recording. The optical recording medium has the absorbency of the first recording layer and the absorbency of the second recording layer at the maximum absorption wavelength λmax, ranging from 0.5 to 0.8 and from 0.8 to 1.4, respectively. I.e., the recording layer near the incident light surface has a lower absorption than the other recording layer.

EP-A-1 496 509 discloses an optical recording medium comprising: a first information substrate, an optically transparent organic interlayer on the first information substrate; and a second information substrate on the optically transparent organic interlayer, in which the optical recording medium is so configured that information recorded on at least one of a recording layer and a second recording layer is reproduced by applying light to the optical recording medium from a surface of a first substrate. The first recording layer must exhibit reduced optical absorption to satisfy the specification and to ensure high optical absorption in the second recording layer.

WO-A-2004/055799, which is used for the two-part form delimitation, discloses a dual-stack optical data storage medium. Its embodiment 1 is a DVD recordable dual stack with (in the following order) a substrate, an reflective layer, a first recording layer L₀ of an azo dye, a first semitransparent reflective layer, a spacer layer, a second semitransparent reflective layer, a second recording layer L₁ of an azo dye, and a second substrate. In this embodiment, recording layer L₀ is nearer to the incident light surface and has an absorbance of 0.2 while recording layer L₁ is farther away from the incident light surface and has an absorbance of 0.4.

### SUMMARY OF THE INVENTION

The object of the present invention is to provide an optical recording medium in which the recording and reproducing is performed by irradiating the light to one surface of the optical recording medium and a satisfactory recording signal characteristic can be obtained also from the second recording layer, a method for producing the above-noted optical recording medium, and a method and apparatus for recording and reproducing the above-noted optical recording medium.

The optical recording medium according to the present invention comprises a first information layer comprising a first substrate and a first recording layer comprised of at least an organic dye, which is disposed on the first substrate; a second information layer comprising a second substrate, a second reflective layer disposed on the second substrate, a second recording layer comprised of an organic dye, which is disposed on the second reflective layer and a second protective layer disposed on the second recording layer; and an intermediate layer on which the first recording layer of the first information layer and the second recording layer of the second information layer are disposed in such a manner that the first recording layer is disposed on a surface of the intermediate layer and the second recording layer is disposed on another surface of the intermediate layer; wherein a difference (A2-A1) between A2 (Abs.) which is a light absorbance of the second recording layer at the wavelength of the light used for the optical recording and A1 (Abs.) which is a light absorbance of the first recording layer at the wavelength of the light used for the optical recording, is in the range of from 0.01 to 0.07. Accordingly, as an optical recording medium comprising two layers, in which the recording and reproducing can be performed by irradiating the light to one surface of the optical recording medium, an optical recording medium in which the recording sensitivity of the second recording layer is satisfactory, can be provided.

The method for producing the optical recording medium according to the present invention is a method for producing the optical recording medium comprising a first information layer comprised of a first substrate and a first recording layer comprising at least an organic dye, which is disposed on the first substrate and a second information layer comprised of a second substrate, a second reflective layer disposed on the second substrate, a second recording layer comprising an organic dye, which is disposed on the second reflective layer and a second protective layer disposed on the second recording layer, and an intermediate layer on which the first recording layer and the second recording layer are disposed in such a manner that the first recording layer of the first information layer is disposed on a surface of the intermediate layer and the second recording layer of the second information layer is disposed on another surface of the intermediate layer; wherein a light absorbance of the second recording layer at the wavelength of the light for the optical recording is larger than a light absorbance of the first recording layer at the wavelength of the light for the optical recording;
wherein the method comprises a step for disposing the first recording layer and the second recording layer by the coating, a step for disposing the second reflective layer on the second substrate by a film formation using vacuum and a step for disposing the second protective layer on the second recording layer by a film formation using vacuum. As a result, a method in which the recording layers have excellent adhesive properties and there is substantially no defect in the step for film formation by coating, can be provided.

According to the method for recording and reproducing the optical recording medium of the present invention, at least one of the recording and reproducing of a signal information in the first and second recording layers is performed by irradiating a light having a wavelength of from 580 nm to 720 nm for the recording to the optical recording medium of the present invention at the surface of the first substrate. In the method for recording and reproducing the optical recording medium of the present invention, at least one of the recording and reproducing of information can be stably, reliably and effectively performed.

The apparatus for the optical recording and reproducing according to the present invention is an apparatus for the optical recording and reproducing in which the information is recorded and reproduced in the optical recording medium according to the present invention by irradiating the light from a light source to the optical recording medium according to the present invention.

According to the optical recording apparatus of the present invention, at least one of the recording and reproducing of information can be performed stably and reliably.

### BRIEF DESCRIPTION OF THE DRAWINGS

FIG. 1 shows a chart for a light absorption spectrum of a dye film.
FIG. 2 is a vertical cross-sectional view showing schematically a composition of DVD comprising two recording layers.
FIG. 3 schematically shows an example of the composition of the optical recording medium according to the present invention.
FIG. 4 schematically shows an example of the composition of the optical recording medium according to the present invention and explains a state of the recording in the first recording layer.
FIG. 5 schematically shows an example of the composition of the optical recording medium according to the present invention and explains a state of the recording in the second recording layer.
FIG. 6 shows a chart for a light absorption spectrum measured with respect to a first recording layer of an optical recording medium produced in Example 1.
FIG. 7 shows a chart for a light absorption spectrum measured with respect to second recording layers of optical recording media produced in Examples 1 to 3, respectively.

### DESCRIPTION OF THE PREFERRED EMBODIMENTS

### (Optical Recording Medium)

The optical recording medium according to the present invention comprises a first information layer, a second information layer, a intermediate layer disposed between the first information layer and the second information layer and optionally the other layers.

The first information layer comprises a first substrate, a first recording layer disposed on the first substrate, which comprises at least an organic dye, and optionally the other layers, such as a first reflective layer, a first protective layer, an undercoating layer and a hard coat layer.

The second information layer comprises a second substrate and at least a second reflective layer, a second recording layer comprising an organic dye and a second protective layer, wherein the second reflective, recording and protective layers are disposed on the second substrate in this order, and optionally the other layers, such as an undercoating layer and a hard coat layer.

In the above-noted optional recording medium, at least one of the recording and reproducing of signal information in the first and second recording layers is performed by irradiating the light having the wavelength of from 580 nm to 720 nm for the recording to the optical recording medium at the surface of the first substrate.

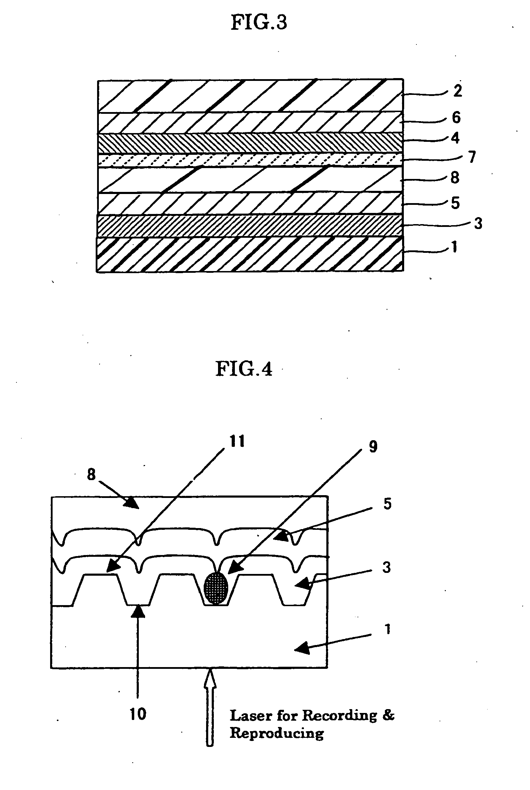

FIG. 3 exemplifies the composition of the optional recording medium according to the present invention. 1 represents the first substrate, 2 represents the second substrate, 3 represents the first recording layer (comprising mainly an organic dye), 4 represents the second recording layer (comprising mainly an organic dye), 5 represents the first reflective layer, 6 represents the second reflective layer, 7 represents the second protective layer, 8 represents the intermediate layer, wherein the recording and reproducing are performed by irradiating the light at the surface of the first substrate.

In the present invention, it is specified that a light absorbance of the second recording layer at the wavelength of the light for the optical recording is larger than a light absorbance of the first recording layer at the wavelength of the light for the optical recording by 0.01 to 0.07. In the case of forming a recording mark in the second recording layer by means of a light for the recording and reproducing, which is damped at the first recording layer and the first reflective layer, in the comparison with the case of DVD-ROM comprising two layers, the damping of the light amount is caused by a light amount absorbed at the first recording layer. Accordingly, in the second recording layer, the recording sensitivity may be difficultly obtained and the recording mark is spread, so that a disadvantage is likely to be caused wherein the crosstalk to an adjacent track may be frequently caused. Further, the necessity to make the depth of the groove on the second substrate less than one the depth of the groove on the first substrate may be a cause for spreading the recording mark and may affect the crosstalk. This is, because the effect to prevent the mark spread can be difficultly obtained by a shallow groove.

Therefore, in the present invention, for improving the recording sensitivity of the second recording layer and preventing the spread of the recording mark in the second recording layer, the optical recording medium is so specified that a light absorbance of the second recording layer at the wavelength of the light for the optical recording is larger than a light absorbance of the first recording layer at the wavelength of the light for the optical recording. The light absorbance of the second recording layer which is disposed on the second substrate as a film comprising dye is preferably from 0.1 to 0.4 as an Abs. value. When the light absorbance is less than the above-noted range of Abs. value, the jitter of the recording mark may be enlarged. On the other hand, when the light absorbance is more than the above-noted range of Abs. value, the reflectance of the second recording layer is lowered. The standard for the reflectance in the two layered DVD-ROM is in the range of 18 to 30 %. For enlarging the light absorbance of the second recording layer, while satisfying the above-noted standard, it is necessary to lessen the light absorbance of the first recording layer. The light absorbance of the first recording layer which is disposed on the second substrate as a film comprising dye is preferably from 0.05 to 0.2 as an Abs. value. Further, the difference of the light absorbance between the first and second recording layer which are disposed on the substrate as a film comprising dye, respectively, is preferably from 0.01 to 0,4, more preferably from 0.02 to 0,2 and even more preferably from 0,01 to 0,07, as an Abs. value. The Abs. value can be measured by a general UV spectrophotometer.

The wavelength of the light used for the recording is preferably from 580 nm to 720 nm, more preferably from 645 nm to 670 nm.

The light absorbance of the recording medium comprising mainly an organic dye can be controlled by changing a thickness of the recording layer and changing the light absorption properties of a dye, preferably by changing the light absorption properties of a dye, since by changing a thickness of the recording layer, an amount of change of properties of the recording film is not constant and the recording sensitivity and the jitter properties may easily get out of the optimum range.

On the other hand, by changing a wavelength corresponding to the maximum light absorbance of a dye (by selecting various dyes having various wavelengths corresponding to the maximum light absorbance of dyes), the light absorbance at the wavelength of the light for the recording and reproducing can be easily controlled without changing the thickness of the recording layer. A preferred range of the wavelength corresponding to the maximum light absorbance is the range of 580 nm to 620 nm, particularly with respect to the second recording layer, the range of 605 nm to 620 nm. When the wavelength corresponding to the maximum light absorbance of the recording layer is less than the above-noted range, the recording sensitivity of the recording layer becomes easily unsatisfactory; on the other hand, when more than the above-noted range, the reflectance of the recording layer can be difficultly obtained. In other words, by selecting a combination of two dyes for the first and second recording layers respectively, in which a dye comprised in the second recording layer has a longer wavelength corresponding to the maximum light absorbance than a wavelength corresponding to the maximum light absorbance of a dye comprised in the first recording layer, an optical recording medium in which a light absorbance at the wavelength corresponding to the maximum light absorbance of the second recording layer is larger than a light absorbance at the wavelength corresponding to the maximum light absorbance of the first recording layer, can be easily obtained. "Comprising mainly an organic dye" means that the recording layer comprises a sufficient amount of an organic dye for the recording and reproducing; however, the recording layer is usually produced by incorporating only a dye (i.e., the recording layer consists only of a dye), except an additive, such as an anti-deterioration agent which is optionally incorporated in the recording layer.

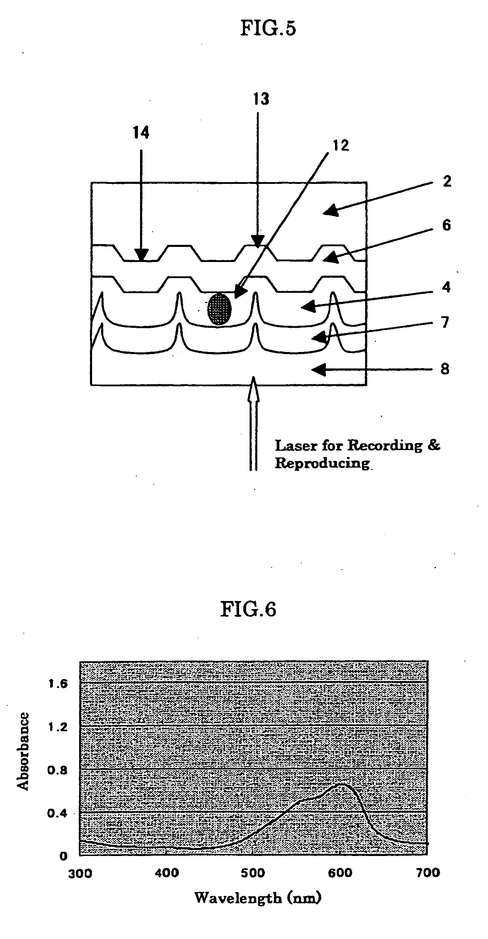

FIGS. 4 and 5 schematically show an example of the composition of the optical recording medium according to the present invention, respectively and explain a state of the recording in the first and second recording layers, respectively. In FIGS. 4 and 5, the numerals 1 to 8 represent the same layers (or substrates) as the layers (or substrates) in FIG. 3.

The recording mark 9 is formed in the first recording layer at a part 10 corresponding to a groove part of the first substrate. On the other hand, the recording mark 12 is formed in the second recording layer a part 14 corresponding to an intergroove part of the second substrate. The numerals 11 and 13 represent respectively, an intergroove part of the first substrate and a groove part of the second substrate.

As shown in FIGS. 4 and 5, a form of the groove formed in the first substrate differs from a form of the groove formed in the second substrate. In the case of DVD+R and DVD-R having a capacity of 4.7 GB and a pitch of 0.74 µm, the groove in the first substrate has preferably a depth of from 1000 angstrom to 2000 angstrom (from 100 nm to 200 nm) and a width (at the bottom of the groove) of from 0.2 to µm 0.3 µm. As shown in FIG. 4, since in the case where the first recording layer is produced according to a method of a spin coat film formation, there is such a tendency that the groove is filled with a dye, the form of the interface between the dye layer (recording layer) and the reflective layer is determined depending on the amount of the filled dye and the form of the groove in the first substrate and therefore, for utilizing a light reflection at the interface between the dye layer and the first reflective layer, the above-noted range of the groove size is appropriate.

On the other hand, the groove in the second substrate has preferably a depth of from 200 angstrom to 500 angstrom (from 20 nm to 50 nm) and a width (at the bottom of the groove) of from 0.2 µm to 0.4 µm. As shown in FIG. 5, since the form of the interface between the dye layer (recording layer) and the reflective layer is determined depending on the form of the groove in the substrate, for utilizing a light reflection at the interface between the dye layer and the reflective layer, the above-noted range of the groove size is appropriate. In both the first substrate 1 and the second substrate 2, when the groove depth is more than the above-noted range, the light reflectance becomes easily lowered. On the other hand, when the groove depth is less than the above-noted range or the groove width gets out of the above-noted range, a formed recording mark is not uniform, so that the jitter becomes easily enlarged.

The second protective layer is disposed on the second recording layer as a barrier layer for protecting the second recording layer from the intermediate layer and since the second protective layer may influence the recording mark signal, care should be paid for selecting a material for the second protective layer. In other words, for suppressing the damping of the light amount of the light entering into the second recording layer for the recording and reproducing, the second protective layer is produced from preferably a transparent material, more preferably a material having excellent adhesive properties to the film. A particularly preferred material for the second protective later is a material comprising mainly a mixture of ZnS and a Si compound and examples of the Si compound include SiO₂ and SiC. In the mixtures ZnS-SiO₂ and ZnS-SiC, a preferred molar ratio between ZnS and a Si compound (mole of ZnS : mole of a Si compound) is, from the viewpoint of the crystallizability of the mixture, 8 : 2. Here, "comprising mainly" means "comprising at least 50 % by mole of a component comprised in the material, relative to 100 % by mole of the material".

The first recording layer can be easily disposed on the first substrate in which a guide groove is formed, as a film according to such a general method as a method for spin-coating a coating liquid produced by dissolving a dye into a solvent, on the substrate; however, in the case of the second recording layer disposed on the second reflective layer comprising a metal film, as a film, the compatibility of the second recording layer with the second reflective layer becomes a problem. Particularly in the case where the second recording layer is disposed as a film on the second reflective layer comprising pure silver which has a high reflectance and is not expensive and therefore, is widely used, a defect in the coating is easily caused.

Therefore, in the present invention, it is preferred that a silver alloy is used as a material for the second reflective layer. Among alloys of silver, examples of a preferred alloy include silver alloys with a trace amount of Nd, Cu and Pd.

The optical recording medium according to the present invention is specified, like DVD+R and CD-R, to obtain a high reflectance by a multiple interference effect at an interface between the recording layer and another adjacent layer and the recording medium possesses preferably such optical properties that the reflectance n is large and the absorbance k is relative small. Preferred ranges of "n" and "k" are n>2 and 0.03<k<0.2, respectively. Such optical properties can be obtained by utilizing properties at a terminal of a longer wavelengths side in the light absorption zone of the film comprising a dye.

Here, in FIG. 1, an example of a light absorption spectrum of the film comprising a dye is shown. A wavelength corresponding to a maximum absorbance or corresponding to a peak absorbance of an organic dye comprised in the recording layer shown in FIG. 1 is preferably in the range of 580 nm to 620 nm. When a wavelength corresponding to a maximum absorbance or a peak absorbance of an organic dye in the recording layer is in the above-noted range, the recording sensitivity is preferred with respect to the reflectance.

### ― First Recording Layer and Second Recording Layer ―

Examples of a dye which can be used in the first and second recording layers include a cyanine dye, a phthalocyanine dye, a pyrylium dye, a thiopyrylium dye, an azulenium dye, a squarylium dye, an azo dye, a formazan chelate dye, a complex salt of a metal (such as Ni and Cr) dye, a naphtoquinone dye, an anthraquinone dye, an indophenol dye, an indoaniline dye, a triphenylmethane dye, a triallylmethane dye, an aminium dye, a diimmonium dye and a nitroso compound dye. These dyes may be used individually or in combination.

Examples of a preferred dye among the above-noted dyes, which is preferred from the viewpoint of film formation properties by a solvent coating and easiness to control optical properties, and has such preferred property that a film comprising the dye has a wavelength corresponding to a maximum absorbance in the light absorption spectrum in the range of 580 nm to 620 nm, so that the film can easily obtain desired optical properties at a wavelength of the laser light for DVD (about 650 nm), include a tetraazaporphyradine dye, a cyanine dye, an azo dye, a squarylium dye, a squarylium metal chelate compound dye and a formazan chelate dye.

Further, the first and second recording layers may optionally comprise other components, such as a polymer material, a stabilizer, a dispersant, a flame-retardant, a lubricant, an anti-static agent, a surfactant and a plasticizer.

Examples of the polymer material include an ionomer resin, a polyamide resin, a vinyl resin, a natural polymer, a silicone, a liquid lubber and a silane coupling agent (which may be used by dispersing and mixing the agent into a composition of the recording medium). Examples of the stabilizer include a complex of a transition metal. The thickness of the first or second recording layer is respectively preferably in the range of 50 angstrom to 2000 angstrom (5 nm to 200 nm), more preferably 50 angstrom to 1000 angstrom (5 nm to 100 nm). When the thickness is less than 50 angstrom, the amount of a dye becomes insufficient to the amount required for forming a recording pit in the recording layer, so that the signal strength, such as the modulation degree is likely to be lowered. On the other hand, when the thickness is more than 2000 angstrom, the recording pit may be difficultly formed, the recording sensitivity may be easily lowered and the jitter may be easily enlarged.

### ― Substrate ―

The substrate should be transparent to the used laser only in the case of performing the recording and reproducing by irradiating the laser to the surface of the substrate and in the case of performing the recording and reproducing by irradiating the laser to the surface of the recording layer, the substrate is not necessary to be transparent. Therefore, in the present invention, a light for the recording, which has a wavelength of from 580nm to 720 nm is irradiated to the surface of the first substrate, so that so long as the first substrate is transparent, it is unproblematic whether the second substrate is transparent or not.

The substrate may be randomly selected from conventional substrates used for the optical recording medium. Examples of a material for the substrate include an acrylic resin, such as polymethylmethacrylate; a vinyl chloride resin, such as polyvinyl chloride and vinyl chloride copolymer; an epoxy resin; a polycarbonate resin; an amorphous polyolefin resin; a polyester resin; and a glass and ceramic, such as a soda-lime glass. Particularly from the viewpoint of dimensional stability, transparency and flat properties, a polymethylmethacrylate resin, polycarbonate resin, epoxy resin, amorphous polyolefin resin, polyester resin and glass are preferred and from the viewpoint of easiness to be shaped, a polycarbonate resin is most preferred.

The substrate is usually in the form of a disc and the size of the track pitch of the substrate is usually preferably from 0.7 µm to 1.0 µm and preferably from 0.7 µm to 0.8 µm for the medium having a large capacity.

### ― Reflective Layer ―

As a material for the first and second reflective layers, a material having a higher reflectance at the wavelength of the used laser is preferred and examples of a preferred material include a metal and so-called semi-metal, such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ca, In, Si, Ge, Te, Pb, Po, Sn and SiC. Among them, a material having a higher reflectance, such as Au, Ag and Al are more preferred. These materials may be used individually or in combination, or as an alloy of them. However, as noted above, with respect to the material of the second reflective layer, care should be paid to the compatibility between the second reflective layer and the second recording layer, from this viewpoint, Ag alloy is preferred.

The thickness of the first reflective layer is preferably from 50 angstrom to 1000 angstrom (from 5 nm to 100 nm) and the thickness of the second reflective layer is preferably from 1000 angstrom to 3000 angstrom (from 100 nm to 300 nm).

Further, when a reflective layer is disposed on the first recording layer, it is necessary that the thickness of the reflective layer is so controlled that the light transmittance of the reflective layer can be 40 % or more.

For protecting the first and second reflective layers chemically and physically, the first protective layer may be disposed. Examples of a material for the first protective layer include an UV-curing resin.

### ― Protective Layer ―

It is preferred that for protecting the second recording layer chemically and physically, the second protective layer is disposed between the second protective layer and the intermediate layer. Examples of a material for the second protective layer include an inorganic substance having high light transmittance, such as SiO, SiO₂, MgF₂, SnO₂, ZnS, ZnS-SiO₂ and ZnS-SiC.

The thickness of the second protective layer is preferably from 100 angstrom to 2000 µm (from 10 nm to 2000 µm). As noted above, examples of a particularly preferred material for the second protective layer include a material having low crystallizability and high refractive index, such as ZnS-SiO₂ and ZnS-SiC.

### ― Intermediate Layer ―

The material for the intermediate layer is not restricted so long as the material can adhesive-bond the first information layer and the second information layer and may be properly selected depending on the application. From the viewpoint of productivity, the material is preferably a UV-curing adhesive or a thermal curable adhesive, such as an acrylate resin, epoxy resin and urethane resin, and a hot-melt adhesive.

The thickness of the intermediate layer is not restricted and may be properly selected depending on the optical condition of the recording and reproducing system. The thickness in the DVD system is preferably from 40 µm to 70 µm.

In the optical recording medium according to the present invention, optionally a hard coat layer in the surface of the substrate and an undercoat layer may be disposed.

The above-noted undercoat layer is used for such purposes that (1) improving adhesive properties, (2) protecting the recording medium from water and a gas, (3) improving preservation stability of the recording layer, (4) improving the reflectance, (5) protecting the substrate and the recording layer from a solvent and (6) forming a guide groove, guide pit and preformat.

For the purpose of (1), a polymer material, such as an iomer resin, a polyamide resin, a vinyl resin, a natural resin, a natural polymer, a silicone, a liquid rubber and a silane coupling agent can be used. For the purposes of (2) and (3), besides the above-noted polymer materials, an inorganic compound, such as SiO₂, MgF₂, SiO, TiO₂, ZnO, TiN and SiN and a metal and a so-called semi-metal, such as Zn, Cu, Ni, Cr, Ge, Se, Au, Ag, Al can be used. For the purposes of (4), a metal, such as Al and Ag and an organic thin film having a metallic sheen, such as a methine dye and xanthene dye can be used. For the purposes of (5) and (6), an UV-curing resin, a thermosetting resin and a thermal plastic resin can be used.

The thickness of the undercoat layer is not restricted and may be properly selected depending on the application. The thickness is preferably from 0.01 µm to 30 µm, more preferably from 0.05 µm to 10 µm.

The above-noted hard coat layer in the surface of the substrate is used for such purposes that (1) protecting the recording layer (absorbing layer of a reflected light) from scratch, dust and dirt, (2) improving preservation stability of the recording layer (absorbing layer of a reflected light) and (3) improving the reflectance. For these purposes, an inorganic material or an organic material which is shown in the above-noted section of the undercoat layer can be used. Examples of the preferred inorganic material include SiO and SiO₂. Examples of the preferred organic material include a polymethylacrylate resin; a polycarbonate resin; an epoxy resin; a polystyrene resin; a polyester resin; a vinyl resin; a cellulose; an aliphatic hydrocarbon resin; an aromatic hydrocarbon resin; a natural rubber; a styrene-butadiene resin; a chloroprene rubber; a wax; an alkyd resin; a heat-softening resin, such as a drying oil and a rosin; a hot-melt resin and an UV-curing resin. Among them, as a material for the protective layer or the hard coat layer in the substrate surface, most preferred is an UV-curing resin which is excellent in productivity.

The thickness of the hard coat layer in the substrate surface is not restricted and may be properly selected depending on the application. The thickness is preferably from 0.01 µm to 30 µm, more preferably from 0.05 µm to 10 µm.

### (Method for Producing the Optical Recording Medium)

The method for producing the optical recording medium according to the present invention is the method for producing the above-noted recording medium according to the present invention and comprises at least a step for disposing the first and second recording layers by the coating, a step for disposing the second reflective layer on the second substrate by a film formation using vacuum and a step for disposing the second protective layer on the second recording layer by a film formation using vacuum; and further a step for adhesive-bonding and optionally other steps.

The optical recording medium according to the present invention is produced according to the following steps (1) to (6).

### <Step for Film Formation on the First Substrate>

(1) A step for disposing the first recording layer comprising mainly an organic dye on the first substrate in which a groove and/or a pit is formed by means of a film formation by coating.
   (2) A step for disposing the first reflective layer on the first recording layer by means of a film formation.

### <Step for Film Formation on the Second Substrate>

(3) A step for disposing the second reflective layer on the second substrate in which a groove and/or a pit is formed by means of a vacuum film formation
(4) A step for disposing the second recording layer comprising mainly an organic dye on the second reflective layer by means of a film formation by coating.
(5) A step for disposing the second protective layer on the second recording layer by means of a film formation.

### <Step for Adhesive-bonding>

(6) A step for adhesive-bonding the first substrate on which a film is formed to the second substrate on which a film is formed through the intermediate layer comprising an adhesive.

Examples of the means of the film formation include a vacuum metallizing process, a sputtering process, a plasma CVD process, a light CVD process, an ion plating process and an electron beam metallizing process. Among them, from the viewpoint of excellence in mass production properties and film quality, a sputtering process is preferred.

In the step for disposing the recording layer, the recording layer is disposed by coating on the substrate a coating liquid which is prepared by dissolving an organic dye in a solvent and optionally further by adding another additive into the above-noted solvent.

As the solvent for preparing the coating liquid, a conventional organic solvent may be used. The organic solvent is not restricted and may be properly selected depending on the application. Examples of the organic solvent include an alcohol, such as methanol, ethanol, isopropyl alcohol and 2,2,3,3-tetrafluoro propanol; a ketone, such as acetone, methyl ethyl ketone and cyclohexanone; an amide, such as N,N-dimethylformamide and N,N-dimethylacetoamide; a sulfoxide, such as dimethylsulfoxide; an ether, such as tetrahydrofuran, dioxane, diethyl ether and ethylene glycol mono methyl ether; a ester, such as methyl acetate and ethyl acetate; an halogenated aliphatic hydrocarbon, such as chloroform, methylene chloride, dichloroethane, carbon tetrachloride and trichloroethane; an aromatic hydrocarbon, such as benzene, xylene, monochloro benzene and dichloro benzene; a cellosolve, such as methoxy ethanol and ethoxy ethanol; and a hydrocarbon, such as hexane, pentane, cyclohexane and methyl cyclohexane.

Examples of a process for the coating include a spinner coating process, a spray process, a roller coating process, a dipping process and a spin coating process. Among them, from the viewpoint of such advantage that the layer thickness can be controlled by adjusting a density and a viscosity of the recording layer and a distilled-off temperature of a solvent in the recording layer, the spin coat process is preferred.

In the process for disposing the reflective layer, the reflective layer is disposed by metallizing, sputtering or ion-plating the above-noted light reflective substance.

In the process for disposing the protective layer, the protective layer is disposed by metallizing, sputtering or ion-plating the above-noted material for the protective layer.

In the process for adhesive-bonding, after an adhesive is put on the surface of the film formed on the first (or second) substrate, the second (or first) substrate is put on the adhesive in such a manner that the second (or first) film layer (recording layer) faces to the first (or second) film layer (recording layer) through the adhesive and the adhesive is spread uniformly, followed by curing the adhesive layer under an irradiated UV ray. The irradiation of UV ray is performed preferably to a surface of the first substrate having a higher light transmittance.

In the above-noted processes for disposing the layers, by using a silver alloy as the material for the second reflective layer and coating a material for the second recording layer on the above-noted second reflective layer, a recording layer with substantially no defect in the coating can be shaped into a film.

Examples of the above-noted other processes include a process for disposing an undercoat layer and a process for disposing a hard coat layer.

### (Method for recording and reproducing the optical recording medium)

The method for recording and reproducing the optical recording medium according to the present invention is a method in which by irradiating a light having the wavelength of from 580 nm to 720 nm which is used for the recording, to the optical recording medium according to the present invention at the surface of the first substrate, at least one of the recording and the reproducing of signal information in the first and second recording layers is performed.

More specifically, while the optical recording medium is rotated at a specified lineal speed or a specified constant angle velocity, to the rotating medium, a light for the recording, such as a semi-conductive laser (for example, having an oscillation wavelength of 650 nm) is irradiated through an objective lens at the surface of the first substrate. The first and second recording layers absorb the irradiated light, thereby elevating the temperature of a part of the first (second) recording layer locally and in the recording layer, a pit is caused and optical properties of the recording layer are changed, so that information can be recorded in the recording layer. The reproducing of the recorded information in the recording layer is performed by detecting a reflected light which is produced at the recording layer in which information is recorded as noted above, when a laser light is irradiated to the recording medium which is rotated at a specified lineal speed, at the surface of the first substrate.

### (Apparatus for Recording and Reproducing the Optical Recording Medium)

The apparatus for the optical recording and reproducing according to the present invention is an apparatus for the optical recording and reproducing in which information is recorded and reproduced in the optical recording medium according to the present invention by irradiating a light to the optical recording medium from a light source.

The apparatus for the optical recording and reproducing is not restricted and may be properly selected depending on the application. An example of the apparatus comprises a laser source from which a laser, such as a semi-conductive laser is irradiated, a collective lens collecting a irradiated laser to the optical recording medium fixed in a spindle, a detector of the laser detecting a portion of the laser irradiated from the laser source, an optical element leading the laser irradiated from the laser source to the collective lens and the laser detector, and optionally other units.

In the apparatus for the optical recording and reproducing, the laser irradiated from the laser source is led to the collective lens by the optical element and the laser collected by the collective lens is irradiated to the optical recording medium, so that the optical recording and reproducing in the optical recording medium is performed. In this procedure, a portion of the laser irradiated from the laser source is led to the laser detector, so that the laser detector can control the light amount of the laser irradiated from the laser source depending on the light amount of the laser detected by the laser detector.

The laser detector may output a detected light amount of the laser as a light amount signal in a voltage or current converted from the light amount by the laser detector.

Examples of the above-noted other units include a controlling unit. The controlling unit is not restricted so long as the unit can control each of the above-noted units and may be selected depending on the application. Examples of the controlling unit include a sequencer and a computer.

Since the apparatus for the optical recording and reproducing according to the present invention is equipped with the optical recording medium according to the present invention which can obtain excellent recording signal properties and can suppress the amount of the crosstalk of the recording mark, the apparatus exhibits such excellent properties as a high reflectance and a high modulation degree, so that a stable recording can be obtained in the apparatus.

Hereinbelow, the present invention will be described in more detail with reference to the following Examples and Comparative Examples, which should not be construed as limiting the scope of the present invention.

### (Example 1)

### ― Preparation of Optical Recording Medium ―

First, a substrate made of polycarbonate resin (as the first substrate) having a diameter of 120 mm and a thickness of 0.58 mm, on which a concave-convex pattern of a guide groove having a depth of 140 nm (1400 angstrom) and a width of 0.25 µm is formed, wherein the pattern has a track pitch of 0.74 µm, was prepared.

Next, on the first substrate, the first recording layer having a thickness of 50 nm (500 angstrom) was disposed by spin-coating a coating liquid prepared by dissolving a mixture of squarylium dyes No. A and B and a formazan-chelate (fc) dye which are represented by the following formulae and were mixed in a mass ratio of A:B:fc = 1:6:3, in 2,2,3,3-tetrafluoropropanol.

A light absorption spectrum of the first recording layer is shown in FIG. 6 and the spectrum shows that a wavelength corresponding to the maximum light absorbance is 603 nm and the maximum light absorbance is 0.65. The absorbance at the wavelength of 658 nm was 0.13 (Abs. value).

Further, on the first recording layer, the first reflective layer was disposed in such a manner that Ag-Nd-Cu alloy (98.4:0.7:0.9 = a ratio of the atom amount, in this order) was plated in a thickness of 15 nm (150 angstrom) on the surface of the first recording layer according to a cathode sputtering process using Ar gas as a sputtering gas.

On the other hand, a substrate made of polycarbonate resin (as the second substrate) having a diameter of 120 mm and a thickness of 0.58 mm, on which a concave-convex pattern of a guide groove having a depth of 28 nm (280 angstrom) and a width of 0.25 µm is formed, wherein the pattern has a track pitch of 0.74 µm, was prepared.

Next, on the second substrate, the second reflective layer was disposed in such a manner that Ag-Nd-Cu alloy (98.4:0.7:0.9 = a ratio of the atom amount, in this order) was plated in a thickness of 120 nm (1200 angstrom) on the surface of the second substrate according to the cathode sputtering process using Ar gas as a sputtering gas.

Further, on the second reflective layer, the second recording layer was disposed in such a manner that a squarylium dye No. C represented by the following formula is coated in a thickness of 50 nm (500 angstrom) on the surface of the second reflective layer according to a spin coat - film formation process.

At the last, on the second recording layer, the second protective layer was disposed in such a manner that ZnS-SiO₂ (80:20 = a ratio of number of mols, in this order) was plated in a thickness of 100 nm (1000 angstrom) on the surface of the second recording layer according to the cathode sputtering process using Ar gas as a sputtering gas.

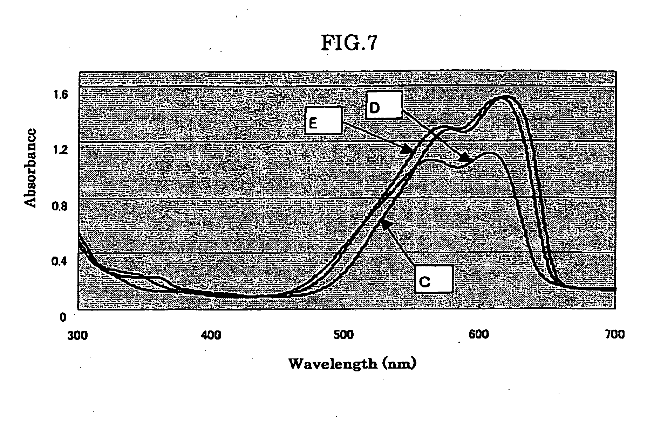

A light absorption spectrum of the second recording layer is shown by the curve (C) in FIG. 7 and the spectrum shows that a wavelength corresponding to the maximum light absorbance is 620 nm and the maximum light absorbance is 1.52. The absorbance at the wavelength of 658 nm was 0.20 (Abs. value).

The first and second substrates on which a film is formed respectively, as noted above, were adhesive-bonded to each other through a UV-curing adhesive (manufactured and sold by Nippon Kayaku Co., Ltd.: trade name; KAYARAD DVD003), thereby producing an optical recording medium having a film composition shown in FIG. 3.

### Formula of a squarylium dye

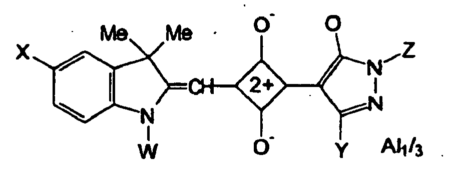

| No. | W | X | Y | Z |
|---|---|---|---|---|
| A | Me | Cl | nPr | Ph |
| B | nBu | Cl | CF3 | Ph |
| C | Me | Benz | nPr | Ph |
| D | Me | Benz | CF3 | Ph |
| E | Me | OMe | nPr | Ph |

wherein "Me" represents a methyl group, "Pr" represents a propyl group, "Ph" represents a phenyl group, "nBu" represents a n-butyl group, and "Benz" represents a benzyl group.

### Formula of a formazan-chelate dye

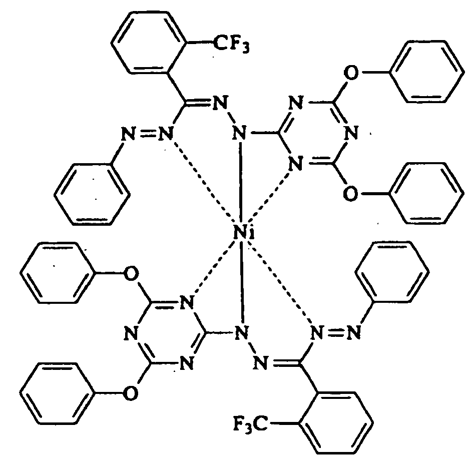

### <Evaluation>

With respect to the obtained optical recording medium, by means of an evaluation apparatus for DVD (manufactured and sold by Pulse Tech Products Corporation: trade name; DDU1000; wavelength = 658 nm, NA = 0.65), a DVD (8-16) signal was recorded in the optical recording medium at a lineal speed of 9.2 m/sec and also reproduced in the optical recording medium at a lineal speed of 3.49 m/sec, thereby evaluating a produced optical recording medium. As shown in FIG. 1, the result of the evaluation has satisfied the DVD-ROM standard. The recording strategy was a multi pulse mode of (n-2) T and the width of multi pulse was 10/16.

**Table 1**

| Properties | DVD standard | First recording layer | Second recording layer |
|---|---|---|---|
| Reflectance after Recording (I14H) | 18 % or more | 20 % | 18 % |
| Modulation degree (I14/I14H) | 60 % or more | 65 % | 85 % |
| Jitter | 8 % or less | 7.2 % | 7.6 % |

### (Example 2)

### ― Preparation of Optical Recording Medium ―

An optical recording medium was produced in substantially the same manner as in Example 1, except that the dye for the second recording layer used in Example 1 was changed to a squarylium dye No. D represented by the above-noted formula.

A light absorption spectrum of the second recording layer is shown by the curve (D) in FIG. 7 and the spectrum shows that a wavelength corresponding to the maximum light absorbance is 607 nm and the maximum light absorbance is 1.12. The absorbance at the wavelength of 658 nm was 0.16 (Abs. value).

The obtained optical recording medium was evaluated in substantially the same manner as in Example 1. The result of the evaluation is shown in Table 2.

**Table 2**

| Properties | DVD standard | First recording layer | Second recording layer |
|---|---|---|---|
| Reflectance after Recording (I14H) | 18 % or more | 20 % | 21 % |
| Modulation degree (I14/I14H) | 60 % or more | 65 % | 73 % |
| Jitter | 8 % or less | 7.2 % | 7.8 % |

From the result shown in Table 2, it was confirmed that an optical recording medium obtained in Example 2 has the same excellent evaluation result as the result of an optical recording medium obtained in Example 1.

### (Example 3)

### ― Preparation of Optical Recording Medium ―

An optical recording medium was produced in substantially the same manner as in Example 1, except that the dye for the second recording layer used in Example 1 was changed to a squarylium dye No. E represented by the above-noted formula. A light absorption spectrum of the second recording layer is shown by the curve (E) in FIG. 7 and the spectrum shows that a wavelength corresponding to the maximum light absorbance is 615 nm and the maximum light absorbance is 1.51. The absorbance at the wavelength of 658 nm was 0.17 (Abs. value).

The obtained optical recording medium was evaluated in substantially the same manner as in Example 1. The result of the evaluation is shown in Table 3.

**Table 3**

| Properties | DVD standard | First recording layer | Second recording layer |
|---|---|---|---|
| Reflectance after Recording (I14H) | 18 % or more | 20 % | 20 % |
| Modulation degree (I14/I14H) | 60 % or more | 65 % | 84 % |
| Jitter | 8 % or less | 7.2 % | 8.0 % |

From the result shown in Table 3, it was confirmed that an optical recording medium obtained in Example 2 has the same excellent evaluation result as the result of an optical recording medium obtained in Example 1.

### (Example 4)

### ― Preparation of Optical Recording Medium ―

An optical recording medium was produced in substantially the same manner as in Example 2, except that a depth of the groove in the second substrate was changed to 50 nm (500 angstrom).

With respect to the obtained recording medium, the reflectance of the second recording layer was evaluated in substantially the same manner as in Example 2 and found to be 18 %.

### (Comparative Example 1)

### ― Preparation of Optical Recording Medium ―

An optical recording medium was produced in substantially the same manner as in Example 2, except that a dye of the second recording layer which is a squarylium dye No. D represented by the above-noted formula which is a mixture of squarylium dyes No. A and B and a formazan-chelate (fc) dye which are represented by the above-noted formulae and were mixed in a mass ratio of A:B:fc = 1:6:3 produced in Example 2.

The obtained recording medium was evaluated in substantially the same manner as in Example 2 and the jitter of the second recording layer was found to be 11 % which cannot satisfy the DVD standard.

### (Comparative Example 2)

### ― Preparation of Optical Recording Medium ―

An optical recording medium was produced in substantially the same manner as in Example 1, except that as the dye for the first recording layer, the above-noted squarylium dye No. C was used and as the dye for the second recording layer, a mixture of squarylium dyes Nos. A and B and a formazan-chelate (fc) dye represented by the above-noted formula, wherein these dyes were mixed in a mass ratio of A:B:fc = 1:6:3, was used.

The obtained recording medium was evaluated in substantially the same manner as in Example 1 and the reflectance and modulation degree of the second recording layer were found to be respectively 14 % and 40 % or less which cannot satisfy the DVD standard.

## Claims

1. An optical recording medium comprising:
a first information layer comprised of
a first substrate (1), and
a first recording layer (3) comprising at least an organic dye, which is disposed on the first substrate (1);
a second information layer comprised of
a second substrate (2),
a second reflective layer (6) disposed on the second substrate (2),
a second recording layer (4) comprising an organic dye, which is disposed on the second reflective layer (6), and
a second protective layer (7) disposed on the second recording layer (4); and an intermediate layer (8) on which the first recording layer (3) of the first information layer and the second recording layer (4) of the second information layer are disposed in such a manner that the first recording layer (3) is disposed on a surface of the intermediate layer (8) and the second recording layer (4) is disposed on another surface of the intermediate layer (8),
**characterized in that**
a difference A 2 - A 1 between A 2 which is a light absorbance of the second recording layer (4) and A 1 which is a light absorbance of the first recording layer (3), is in the range of from 0.01 to 0.07 at the wavelength of the light used for the optical recording, where A 1 and A 2 are measured as Abs values by a general UV spectrophotometer.

2. The optical recording medium according to claim 1,
wherein a light absorbance of the second recording layer (4) at the wavelength of the light used for the optical recording is in the range of from 0.1 to 0.4.

3. The optical recording medium according to any one of claims 1 and 2,
wherein the wavelength of the light used for the recording is from 580 nm to 720 nm.

4. The optical recording medium according to any one of claims 1 to 3,
wherein a wavelength corresponding to the maximum light absorbance of the second recording layer (4) is larger than a wavelength corresponding to the maximum light absorbance of the first recording layer (3).

5. The optical recording medium according to any one of claims 1 to 4,
wherein a wavelength corresponding to the maximum light absorbance of the second recording layer (4) is in the range of from 605 nm to 620 nm.

6. The optical recording medium according to any one of claims 1 to 5,
wherein the recording and reproducing of signal information in the first and second recording layers (3, 4) are performed by irradiating a light to the surface of the first substrate (1).

7. The optical recording medium according to any one of claims 1 to 6,
wherein the organic dye comprised in the first recording layer (3) and the organic dye comprised in the second recording layer (4) are independently at least one dye selected from the group consisting of a tetraazaporphyradine dye, a cyanine dye, an azo dye, a squarylium dye, squarylium metal chelate compound dye and a formazan chelate dye.

8. The optical recording medium according to any one of claims 1 to 7,
wherein the wavelength corresponding to the maximum light absorbance of the organic dye comprised in the first recording layer (3) differs from the wavelength corresponding to the maximum light absorbance of the organic dye comprised in the second recording layer (4).

9. The optical recording medium according to any one of claims 1 to 8,
wherein the second recording layer (4) has a thickness of 5 nm to 200 nm.

10. The optical recording medium according to any one of claims 1 to 9,
wherein guide grooves of the second substrate (2) have a depth of from 20 nm to 50 nm.

11. The optical recording medium according to any one of claims 1 to 10,
wherein the second protective layer (7) comprises a mixture of ZnS and a Si compound.

12. The optical recording medium according to any one of claims 1 to 11.
wherein the second reflective layer (6) comprises a silver alloy.

13. A method for producing an optical recording medium according to any one of claims 1 to 12,
wherein the method comprises:
disposing the first and second recording layers (3, 4) by the coating, disposing the second reflective layer (6) on the second substrate (2) by a film formation using vacuum, and
disposing the second protective layer (7) on the second recording layer (4) by a film formation using vacuum.

14. A method for recording and reproducing an optical recording medium according to any one of claims 1 to 12,
wherein the method comprises:
irradiating a light having the wavelength of from 580 nm to 720 nm which is used for the recording of the optical recording medium, to the optical recording medium at the surface of the first substrate (1); and
performing at least one of the recording and reproducing of signal information in the first and second recording layers (3, 4).

15. An apparatus for the optical recording and reproducing comprising:
an optical recording medium in which information is recorded and reproduced; and
a light source from which a light is irradiated to the optical recording medium for performing the optical recording and reproducing,
wherein an optical recording medium is an optical recording medium according to any one of claims 1 to 12.

## Patentansprüche

1. Optisches Aufzeichnungsmedium, umfassend:
eine erste Informationsschicht, umfassend
ein erstes Substrat (1) und
eine erste Aufzeichnungsschicht (3), umfassend mindestens einen organischen Farbstoff, die auf dem ersten Substrat (1) angeordnet ist; eine zweite Informationsschicht, umfassend
ein zweites Substrat (2),
eine zweite Reflexionsschicht (6), die auf dem zweiten Substrat (2) angeordnet ist,
eine zweite Aufzeichnungsschicht (4), umfassend einen organischen Farbstoff, die auf der zweiten Reflexionsschicht (6) angeordnet ist, und
eine zweite Schutzschicht (7), die auf der zweiten Aufzeichnungsschicht (4) angeordnet ist;
und eine Zwischenschicht (8), auf der die erste Aufzeichnungsschicht (3) der ersten Informationsschicht und die zweite Aufzeichnungsschicht (4) der zweiten Informationsschicht in einer solchen Weise angeordnet sind, dass die erste Aufzeichnungsschicht (3) auf einer Oberfläche der Zwischenschicht (8) angeordnet ist und die zweite Aufzeichnungsschicht (4) auf einer anderen Oberfläche der Zwischenschicht (8) angeordnet ist,
**dadurch gekennzeichnet, dass**
der Unterschied A2 - A1 zwischen A2, welche eine Lichtabsorbanz der zweiten Aufzeichnungsschicht (4) ist, und A1, welche eine Lichtabsorbanz der ersten Aufzeichnungsschicht (3) ist, im Bereich von 0,01 bis 0,07 liegt bei der Wellenlänge des Lichts, das für die optische Aufzeichnung verwendet wird, wobei A1 und A2 als Abs-Werte durch ein allgemeines UV-Spektralphotometer gemessen werden.

2. Optisches Aufzeichnungsmedium nach Anspruch 1, wobei eine Lichtabsorbanz der zweiten Aufzeichnungsschicht (4) bei der Wellenlänge des Lichts, das für die optische Aufzeichnung verwendet wird, im Bereich von 0,1 bis 0,4 ist.

3. Optisches Aufzeichnungsmedium nach irgendeinem der Ansprüche 1 und 2, wobei die Wellenlänge des Lichts, das für die Aufzeichnung verwendet wird, 580 nm bis 720 nm ist

4. Optisches Aufzeichnungsmedium nach irgendeinem der Ansprüche 1 bis 3, wobei die Wellenlänge, die der maximalen Lichtabsorbanz der zweiten Aufzeichnungsschicht (4) entspricht, größer als die Wellenlänge ist, die der maximalen Lichtabsorbanz der ersten Aufzeichnungsschicht (3) entspricht.

5. Optisches Aufzeichnungsmedium nach irgendeinem der Ansprüche 1 bis 4, worin die Wellenlänge, die der maximalen Lichtabsorbanz der zweiten Aufzeichnungsschicht (4) entspricht, im Bereich von 605 nm bis 620 nm liegt.

6. Optisches Aufzeichnungsmedium nach irgendeinem der Ansprüche 1 bis 5, worin das Aufzeichnen und Reproduzieren von Signalinformation in den ersten und zweiten Aufzeichnungsschicht (3, 4) durch Bestrahlen der Oberfläche des ersten Substrats (1) mit Licht durchgeführt werden.

7. Optisches Aufzeichnungsmedium nach irgendeinem der Ansprüche 1 bis 6, worin der organische Farbstoff, der in der ersten Aufzeichnungsschicht (3) enthalten ist, und der organische Farbstoff, der in der zweiten Aufzeichnungsschicht (4) enthalten ist, unabhängig mindestens ein Farbstoff ausgewählt aus der Gruppe bestehend aus einem Tetraazaporphyradin-Farbstoff, einem Cyanin-Farbstoff, einem Azo-Farbstoff, einem Squarylium-Farbstoff, einem Squaryliummetallchelatverbindungs-Farbstoff und einem Formazanchelat-Farbstoff sind.

8. Optisches Aufzeichnungsmedium nach irgendeinem der Ansprüche 1 bis 7, worin die Wellenlänge, die der maximalen Lichtabsorbanz des organischen Farbstoffs, der in der ersten Aufzeichnungsschicht (3) enthalten ist, entspricht, sich von der Wellenlänge, die der maximalen Lichtabsorbanz des organischen Farbstoffs, der in der zweiten Aufzeichnungsschicht (4) enthalten ist, entspricht, unterscheidet.

9. Optisches Aufzeichnungsmedium nach irgendeinem der Ansprüche 1 bis 8, worin die zweite Aufzeichnungsschicht (4) eine Dicke von 5 nm bis 200 nm aufweist.

10. Optisches Aufzeichnungsmedium nach irgendeinem der Ansprüche 1 bis 9, worin Führungsrillen des zweiten Substrats (2) eine Tiefe von 20 nm bis 50 nm haben.

11. Optisches Aufzeichnungsmedium nach irgendeinem der Ansprüche 1 bis 10, worin die zweite Schutzschicht (7) eine Mischung von ZnS und einer Si-Verbindung umfasst.

12. Optisches Aufzeichnungsmedium nach irgendeinem der Ansprüche 1 bis 11, worin die zweite Reflexionsschicht (6) eine Silberlegierung umfasst.

13. Verfahren zur Herstellung eines optischen Aufzeichnungsmediums nach irgendeinem der Ansprüche 1 bis 12, wobei das Verfahren umfasst:
das Anordnen der ersten und zweiten Aufzeichnungsschicht (3, 4) durch das Beschichten, das Anordnen der zweiten Reflexionsschicht (6) auf dem zweiten Substrat (2) durch eine Filmbildung unter Verwendung von Vakuum und
das Anordnen der zweiten Schutzschicht (7) auf der zweiten Aufzeichnungsschicht (4) durch eine Filmbildung unter Verwendung von Vakuum.

14. Verfahren zur Aufzeichnung und Reproduktion eines optischen Aufzeichnungsmediums nach irgendeinem der Ansprüche 1 bis 12, wobei das Verfahren umfasst:
das Bestrahlen des optischen Aufzeichnungsmediums an der Oberfläche des ersten Substrats (1) mit Licht mit einer Wellenlänge von 580 nm bis 720 nm, das für die Aufzeichnung des optischen Aufzeichnungsmediums verwendet wird; und
das Durchführen der Aufzeichnung und/oder der Reproduktion von Signalenformation in der ersten und zweiten Aufzeichnungsschicht (3, 4).

15. Vorrichtung zur optischen Aufzeichnung und Reproduktion, umfassend:
ein optisches Aufzeichnungsmedium, in dem Information aufgezeichnet und reproduziert wird; und
eine Lichtquelle, mit der das optischen Aufzeichnungsmedium mit Licht bestrahlt wird, um die optische Aufzeichnung und Reproduktion auszuführen, wobei das optische Aufzeichnungsmedium ein optisches Aufzeichnungsmedium nach irgendeinem der Ansprüche 1 bis 12 ist

## Revendications

1. Support d'enregistrement optique, comprenant :
une première couche d'information composée de :
un premier substrat (1) ; et
une première couche d'enregistrement (3) comprenant au moins un colorant organique qui est disposé sur le premier substrat (1) ;
une seconde couche d'information composée de :
un second substrat (2)
une seconde couche réfléchissante (6) disposée sur le second substrat (2),
une seconde couche d'enregistrement (4) comprenant un colorant organique qui est disposé sur la seconde couche réfléchissante (6), et
une seconde couche de projection (7) disposée sur la seconde couche d'enregistrement (4) ; et une couche intermédiaire (8) sur laquelle la première couche d'enregistrement (3) de la première couche d'information et la seconde couche d'enregistrement (4) de la seconde couche d'information sont disposées de sorte que la première couche d'enregistrement (3) est disposée sur une surface de la couche intermédiaire (8) et la seconde couche d'enregistrement (4) est disposée sur une autre surface de la couche intermédiaire (8),
**caractérisé en ce que** :
une différence A2 - A1 entre A2 qui est une absorbance de lumière de la seconde couche d'enregistrement (4) et A1 qui est une absorbance de lumière de la première couche d'enregistrement (3) est dans une plage allant de 0,01 à 0,07, à la longueur d'onde de la lumière utilisée pour l'enregistrement optique, où A1 et A2 sont mesurés en tant que valeurs Abs par un spectrophotomètre UV général.

2. Support d'enregistrement otique selon la revendication 1, dans lequel une absorbance de lumière de la seconde couche d'enregistrement (4) à la longueur d'onde de lumière utilisée pour l'enregistrement optique est dans la plage allant de 0,1 à 0,4.

3. Support d'enregistrement optique selon l'une quelconque des revendications 1 et 2, dans lequel la longueur d'onde de la lumière utilisée pour l'enregistrement est de l'ordre de 580 nm à 720 nm.

4. Support d'enregistrement optique selon l'une quelconque des revendications 1 à 3, dans lequel une longueur d'onde correspondant à l'absorbance de lumière maximum de la seconde couche d'enregistrement (4) est plus grande qu'une longueur d'onde correspondant à l'absorbance de lumière maximum de la première couche d'enregistrement (3).

5. Support d'enregistrement optique selon l'une quelconque des revendications 1 à 4, dans lequel une longueur d'onde correspondant à l'absorbance de lumière maximum de la seconde couche d'enregistrement (4) est dans la plage allant de 605 nm à 620 nm.

6. Support d'enregistrement optique selon l'une quelconque des revendications 1 à 5, dans lequel l'enregistrement et la production de l'information de signal dans les première et seconde couches d'enregistrement (3, 4) sont réalisés en rayonnant une lumière sur la surface du premier substrat (1).

7. Support d'enregistrement optique selon l'une quelconque des revendications 1 à 6, dans lequel le colorant organique compris dans la première couche d'enregistrement (3) et le colorant organique compris dans la seconde couche d'enregistrement (4) sont indépendamment, au moins un colorant choisi dans le groupe comprenant un colorant de tétraazaporphyrine, un colorant de cyanine, un colorant azoïque, un colorant à base de squarylium, un colorant de composé chélaté métallique à base de squarylium et un colorant chélaté à base de formazan.

8. Support d'enregistrement optique selon l'une quelconque des revendications 1 à 7, dans lequel la longueur d'onde correspondant à l'absorbance de lumière maximum du colorant organique compris dans la première couche d'enregistrement (3) est différente de la longueur d'onde correspondant à l'absorbance de lumière maximum du colorant organique compris dans la seconde couche d'enregistrement (4).

9. Support d'enregistrement optique selon l'une quelconque des revendications 1 à 8, dans lequel la seconde couche d'enregistrement (4) a une épaisseur de 5 nm à 200 nm.

10. Support d'enregistrement optique selon l'une quelconque des revendications 1 à 9, dans lequel des rainures de guidage du second substrat (2) ont une profondeur allant de 20 nm à 50 nm.

11. Support d'enregistrement optique selon l'une quelconque des revendications 1 à 10, dans lequel la seconde couche de projection (7) comprenant un mélange de ZnS et un composé de Si.

12. Support d'enregistrement optique selon l'une quelconque des revendications 1 à 11, dans lequel la seconde couche réfléchissante (6) comprend un alliage d'argent.

13. Procédé pour produire un support d'enregistrement optique selon l'une quelconque des revendications 1 à 12, dans lequel le procédé comprend les étapes consistant à :
disposer les première et seconde couches d'enregistrement (3, 4) par le revêtement, disposer la seconde couche réfléchissante (6) sur le second substrat (2) par une formation de film en utilisant du vide, et
disposer la seconde couche de projection (7) sur la seconde couche d'enregistrement (4) par une formation de film en utilisant du vide.

14. Procédé pour enregistrer et reproduire un support d'enregistrement optique selon l'une quelconque des revendications 1 à 12, dans lequel le procédé comprend les étapes consistant à :
rayonner une lumière ayant une longueur d'onde allant de 580 nm à 720 nm qui est utilisée pour l'enregistrement du support d'enregistrement optique, sur le support d'enregistrement optique au niveau de la surface du premier substrat (1) ; et
réaliser au moins l'un parmi l'enregistrement et la reproduction de l'information de signal dans les première et seconde couches d'enregistrement (3, 4).

15. Appareil pour l'enregistrement et la reproduction optiques comprenant :
un support d'enregistrement optique dans lequel l'information est enregistrée et reproduite ; et
une source de lumière à partir de laquelle une lumière est rayonnée sur le support d'enregistrement optique pour réaliser l'enregistrement et la reproduction optiques,
dans lequel un support d'enregistrement optique est un support d'enregistrement optique selon l'une quelconque des revendications 1 à 12.
